# EUROPEAN PATENT SPECIFICATION

(11) **EP 0 673 289 B1**
(45) Date of publication and mention of the grant of the patent: **08.01.1997**
(21) Application number: 93924143.6
(22) Date of filing: 01.11.1993
(51) Int. Cl.: B07C 5/342

(54) **SEPARATING PLASTICS MATERIALS**
TRENNUNG VON KUNSTSTOFFEN
SEPARATION DE MATIERES PLASTIQUES

(30) Priority: 07.11.1992 GB 9223402; 12.07.1993 GB 9314359
(43) Date of publication of application: 27.09.1995
(73) Proprietor: FORD MOTOR COMPANY LIMITED, Brentwood, Essex CM13 3BW (GB); FORD-WERKE AKTIENGESELLSCHAFT, 50735 Köln (DE); FORD MOTOR COMPANY, Dearborn, MI 48126 (US); FORD FRANCE S. A., 92506 Rueil-Malmaison Cédex (FR)
(72) Inventor: MUCCI, Peter Edmund Rueben, Southampton, Hampshire SO3 (GB); GRAHAM, John Terence, Storrington, West Sussex RH20 4PG (GB); HENDRA, Patrick John, Nr. Winchester, Hampshire SO21 2PR (GB)
(74) Representative: Messulam, Alec Moses
(86) International application number: GB9302244
(87) International publication number: WO9411126

(56) References cited:
- EP-A- 0 081 702
- EP-A- 0 100 399
- GB-A- 1 579 741
- GB-A- 2 172 699
- US-A- 3 747 755
- US-A- 5 041 996

## Description

This invention relates to a method for separating different plastics materials, particularly plastics materials used in the automotive industry. The invention also extends to an instrument for use in this method.

When a motor car is scrapped, its useful components such as battery, tyres or radio are removed, usually for use in other vehicles. The metal parts of the scrap car are generally recycled, and what remains is shredded and used as land-fill.

The remainder that is used for land-fill consists principally of a mixture of plastics materials. For environmental and/or economic reasons it is desirable to be able to recycle such waste plastics material. However, it is not possible effectively to recycle mixtures of waste plastics without first separating them into chemically similar groups. Failure to achieve this separation would mean that unknown proportions or different plastics materials were incorporated in the melt during the reclaim process. The presence of other plastics components in a blend may necessitate changes in processing conditions or lead to unacceptable changes in the physical properties of the finished recycled plastics material.

A requirement for any practically useful method of separating plastics materials for recycling is that the separation be made quickly, preferably in less than ore minute per sample. Slow separation speeds would slow down the rate of plastics material recovery, making it a less economic process. Currently, however, there is no quick and simple method for identifying the chemical constitution of a plastics component, and therefore no simple method of separating such plastics materials is available.

It is known to use diffuse reflectance spectroscopy in the near-infrared region to separate bottles and containers made of different plastics materials; see, for example US patent number 5 134 291.

This technique allows the separation of clear or white plastics containers. However dark plastics materials, for example those filled with carbon black, cannot be identified and separated because the pigment absorbs near-infrared radiation.

Near-infrared absorption bands are caused by overtones and combinations of fundamental molecular vibrations. The near-infrared region has a wavenumber range which extends from around 4000 cm⁻¹ up to higher frequencies. For example, in Journal of Applied Polymer Science 31, 2417-31 (1986) L G Weyer describes near-infrared spectroscopy in the range 1100-2500 nm, which corresponds to frequencies of 9091-4000 cm⁻¹, for characterising industrial polymers. Weyer reports that the use of near-infrared spectroscopy allows rapid, accurate analyses with little or no sample preparation.

Near-infrared spectroscopy however, in addition to being unsuitable for analysis of dark coloured plastics materials, measures absorption bands which are orders of magnitude weaker than mid-infrared bands, which are in the wavenumber range of around 4000-400 cm⁻¹. Near-infrared spectroscopy therefore requires more sensitive optical components than mid-infrared spectroscopy, and these may be expensive or may require careful handling which is undesirable in an uncontrolled industrial environment.

Furthermore, diffuse reflectance spectroscopy produces a relatively low energy output with a low signal to noise ratio. To produce a useful spectrum it is necessary either to use a slow scan rate, or to carry out more scans and use a Fourier Transform process, both of which increase the process time, or to use a highly sensitive detector, for example an MCT detector which is relatively expensive and requires cooling.

It is an object of the present invention to provide improved separation of different types of plastics materials that can be carried out rapidly, simply, relatively cheaply, and safely.

According to the present invention there is provided an instrument for separating a mixture of pieces of plastics materials into separate categories, the instrument being provided with a mid-infrared radiation source for emitting mid-infrared radiation in the wave range 4000-400 cm⁻¹, means for directing mid-infrared radiation onto a sample surface and for collecting a spectrum of specularly reflected infrared radiation from the sample surface, means for supporting the sample surface at a predetermined position relative to the infrared radiation source and to the means for collecting the reflected spectrum, means for storing reference output spectra and means for comparing the collected spectrum with the stored reference spectra.

By using mid-infrared radiation it is possible to identify and separate dark filled plastics materials, because dark pigments, for example carbon black, do not absorb too much in this spectral region.

Specular reflectance from a sample surface is of a higher intensity than diffuse reflectance. This permits a spectrum to be obtained quickly, by means of a relatively insensitive detector.

This instrument enables identification to be made very quickly. A typical operation takes less than twenty seconds for a spectrum to be obtained. The invention can therefore be used alongside a moving disassembly line, or can be used by a relatively unskilled operator within promises where plastics or similar sorting needs to be carried out, to classify a plastics material simply by reference to a limited number of key spectra of known plastics materials used in component manufacture.

For convenience, the term "sample" or "samples" will be used hereinafter to refer to a piece or pieces of plastics material to be identified.

Scanning a narrower band within the wave number range of 4000 - 400 cm⁻¹ permits faster data acquisition. A preferred wave number range is 2500 - 1000 cm⁻¹, which typically allows a spectrum to be obtained in a few seconds.

A sample spectrum may be quickly measured by means of an interferometer. A plurality of scans may be made, and a Fourier Transform (FT) operation performed to reduce the level of noise in the output spectrum.

In a preferred embodiment, a sample of plastics material is presented at an aperture in an outer casing of the instrument, which hereinafter will be referred to as a spectrometer. One or more mirrors within the spectrometer reflect infrared radiation through the aperture and on to the sample; radiation reflected from the sample is directed by one or more mirrors into a detector.

This arrangement has the benefit of allowing fast sample throughput and protecting the internal components from unskilled operators.

The aperture may be located anywhere on the outer casing. It is preferred that the gap be either on the top of the casing, so that a sample may be rested on the casing, or on the side, so that an operator may hold the sample against the aperture whilst making an identification. By locating the gap on the side of the casing, the ingress of dust or other atmospheric contaminants may be reduced.

The surface which is scanned may be 'as found', ie it may be possible to scan and identify plastics parts direct from a disassembly line without any cleaning being necessary. However in other cases, and where the parts are painted or contaminated with oil, cleaning or other sample preparation may be required. Such painted or contaminated plastics materials may be prepared for scanning and identification by abrasion or by cutting away the surface of a piece of plastics material to be identified.

In a preferred embodiment the instrument also includes means for directing each piece of plastics material into one of a number of different collecting containers.

Preferably the means for comparing spectra comprises electronic circuitry which compares the spectrum with stored spectra.

Preferably the instrument includes an aperture or window in its external casing, and the sample support means are adapted to support the sample on the outside of the instrument and overlying the aperture. This arrangement permits more rapid throughput of samples.

The aperture preferably is also provided with protective means to reduce the ingress of dust or other contaminants.

The protective means may comprise a shutter and a shutter actuator, so that when a sample is located over the aperture the actuator opens the shutter, permitting infrared radiation to pass through the aperture, and when the sample is removed the actuator closes the shutter, preventing the passage of infrared radiation through the aperture and reducing the passage of air through the aperture.

In a further alternative embodiment, the protective means may comprise a lens or cover that is made of a material substantially transparent to infrared radiation in the preferred wave number range. This embodiment permits the optical system to be substantially isolated from the environment in which it is operated.

The instrument may be adapted to be held in the hand, to permit it to be used to identify large samples by bringing the instrument to the samples.

Samples may be brought to the instrument for identification and subsequent separation, or the instrument may be mounted alongside a path along which plastics materials to be identified are moved.

Preferably the group of materials whose spectra are used for comparison includes: polypropylene, acrylonitrile/butadiene/styrene terpolymer (ABS), polycarbonate, polyamide, polyethylene, polystyrene, PVC, acrylics, rubber, and their copolymers and blends.

It is particularly preferred that the group of materials whose spectra are used for comparison includes: polypropylene, ABS, polycarbonate, polyamide, and their copolymers and blends.

The above materials are the most commonly used in the manufacture of motor vehicles today. They are also used for the manufacture of component parts of a wide range of industrial, office and domestic equipment. It will be obvious to one skilled in the art to include spectra from new plastics materials as they are introduced into vehicle and other manufacture in significant quantities in the future.

The spectral comparison with known plastics materials may be carried out by visual evaluation of the output from a chart recorder, printer or like means, against similar outputs from standard reference materials, or by visual examination as the spectra of the unknown materials on a visual display unit (vdu) screen.

Alternatively, the spectral comparison maybe carried out by means of a computer program, whereby each comparative spectrum is stored numerically as one or more characteristic intensity absorption peaks, or its derivative with respect to frequency or wavelength, against which numerical peak values for the spectrum of an unknown plastics material are automatically compared, and the result expressed as an identification or as an unknown material. The computer program may use statistical techniques to compare the relative peak heights and peak positions of the spectrum of an unknown plastics material with reference spectra kept in its database. The sophistication of the program and its statistical techniques may be further refined with time, and as more sample spectra are added to the database.

The instrumentation set forth above provides a simple, quick and convenient means of identifying plastics materials.

The invention will also be suitable for use in measuring chemical changes occurring in a plastics material as a result of ageing, exposure to the environment, or other factors.

The invention will now be further described, by way of example, by reference to the accompanying drawings in which:
Figure 1 is a schematic view of a cell arrangement for scanning a plastics material with infrared radiation in accordance with the invention;
Figure 2 is a print of an infrared spectrum of polypropylene for use according to the invention; and
Figure 3 is a print of an infrared spectrum of ABS for use according to the invention;
Figure 4 is a part section through the housing of an instrument in accordance with a preferred embodiment of the invention;
Figure 5 is a schematic view from above of the arrangement of optics for the instrument shown in Figure 4.

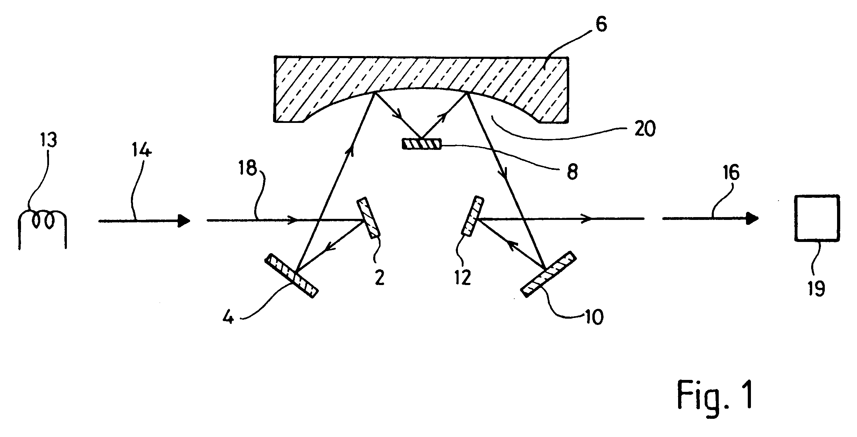

Figure 1 shows how a piece of plastics material 8 is scanned with infrared radiation 18. Infrared radiation 18 enters the cell arrangement from a source 13 as indicated by the arrow 14, and is directed by planar mirrors 2, 4 and a curved mirror 6 onto the top surface of the plastics material 8. Reflected light 20 from the material 8 is directed to a detector 19 in the direction of the arrow 16 by the curved mirror 6 and the planar mirrors 10, 12.

A Fourier Transform operation is carried out on a plurality of such scans according to well known principles.

For the purposes of development of the system, the spectra were displayed on a vdu, by means of Perkin Elmer (TM) Infra-Red Data Management software, and printed on a conventional pen plotter.

A standard DTGS detector was used. This detector is relatively inexpensive, and it runs at room temperature without requiring cooling.

The number of different plastics materials available as post-consumer waste is small. For practical identification purposes it is therefore sufficient to provide as reference spectra only those for the few materials that are commonly used. By limiting the number of reference spectra it is possible to speed up the identification process, and hence the sorting time.

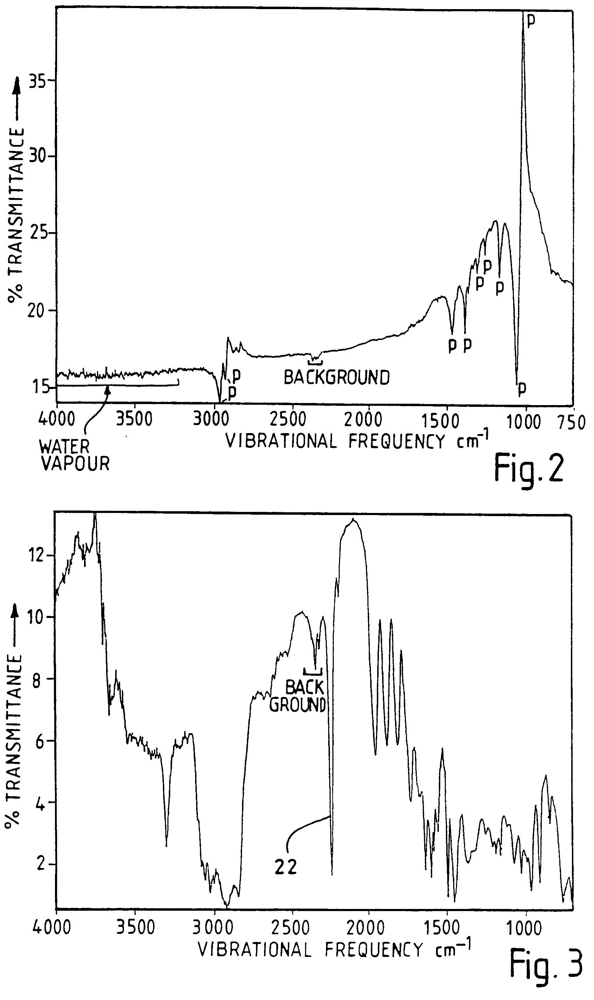

Figures 2 and 3 show the spectra obtained for, respectively, polypropylene and ABS. A person skilled in the art of infrared spectroscopy will be able to infer considerable structural information from these spectra. However, it is rot necessary to have knowledge of infrared spectroscopy to recognise that the two spectra are very different, and consequently to make a correct identification and to direct the piece of plastics material in the correct bin. In the case of ABS, for example, a single characteristic absorption peak 22 (which appears as a trough in transmission) at 2300 - 2200 cm⁻¹ (which corresponds to the presence of a nitrile group) is sufficient for a positive identification.

The exact spectral resolution required to gave a positive sample identification depends upon the nature of the samples to be separated and the conditions under which measurement takes place. We have found that spectra measured at resolutions in the range 6-10 cm⁻¹ give useful spectra; in some cases resolutions as low as 16 cm⁻¹ were found to give a positive identification.

Spectra are normally recorded using one data point (DP) per wave number. However recording one DP per two wave numbers at a resolution of 8 cm⁻¹ gave spectra of acceptable quality for plastics identification purposes and permitted sample throughput of a few seconds per sample.

By using only the minimum necessary number of scans per sample, prior to FT analysis, the sample throughput may be improved. We have found that 2-10 scans gave acceptable quality, with 4 scans being usable routinely. An improvement on this figure is likely as the instrument is further developed.

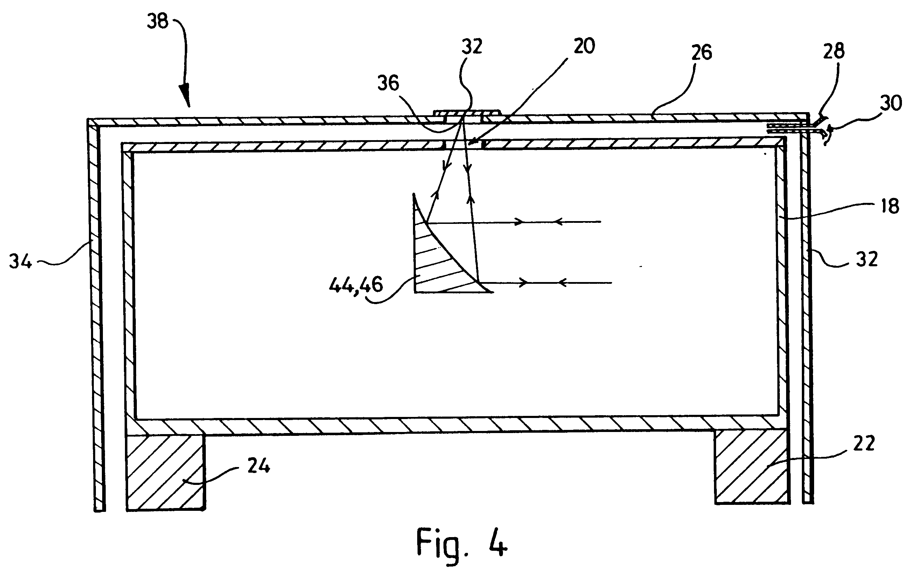

Figure 4 shows a housing arrangement for a preferred embodiment of an instrument according to the invention. The casing 18 of the instrument has an aperture 20. The casing 18 is supported by feet 22, 24. A housing 38 surrounds the casing 18, the housing 38 comprising a flat plate 26 which has an aperture 36, and independent supports 32, 34. An inlet 28, which extends through the housing 38, is connected to a dry nitrogen supply 30.

In operation, a plastics sample 32 which is to be identified is placed over the aperture 36 in the housing 38. The aperture 36 in the housing 38 is in registration with the aperture 20 in the casing 18. A scan is carried out by causing mid-infrared radiation to pass up through the casing aperture 20 and through the housing aperture 36, onto the sample 32. Radiation reflected from the sample 32 passes back into the instrument and is collected.

Dry nitrogen 30 passes through the inlet 28 and flows between the housing 38 and the instrument casing 18. This helms to maintain a stable environment within the instrument and reduces the amount of dust entering the instrument through the apertures 20 and 36.

By connecting the housing 38 to the ground independently of the instrument casing 18, the effects on the instrument of vibration or knocks or the housing are reduced.

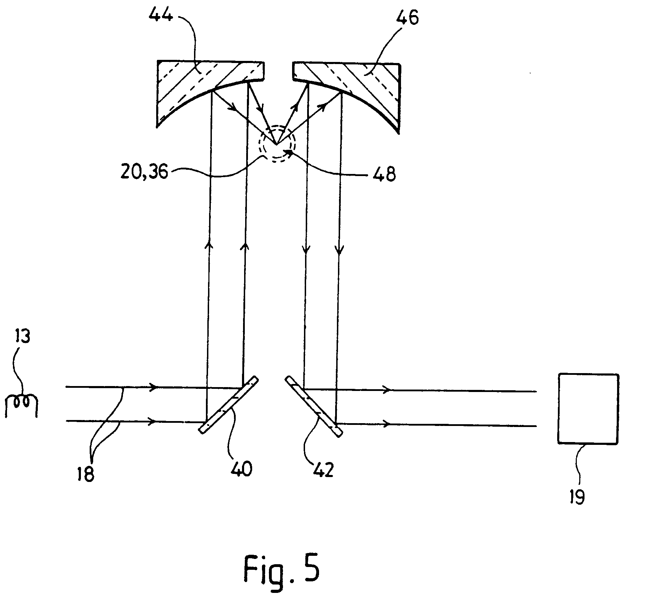

Figure 4 also shows how infrared radiation is directed up to, and received from, the sample 32 by ellipsoid mirrors 44 and 46. The optics are shown in more detail in Figure 5 which shows how the infrared radiation is directed through the apertures 20 and 36. An optical arrangement is interposed between the infrared source 13 and the detector 19, the arrangement comprising two planar mirrors 40, 42, and two angled ellipsoid mirrors 44, 46.

Infrared radiation 18 enters the cell arrangement from the source 13 and is directed by the first planar mirror 40 to the first ellipsoid mirror 44. The ellipsoid mirror 44 is angled so as to focus infrared rays from the planar mirror 40, through the casing aperture 20, to a focal point 48 which is located within or vertically adjacent to the housing aperture 36 where the sample (not shown) is located. Rays reflected from the sample pass back through the casing aperture 20 onto a second ellipsoid mirror 46 which in turn reflects the rays onto a second planar mirror 42 and thence to the detector 19.

Because the number of possible plastics materials that may be found as post-consumer waste is small, positive identification, and hence separation, is easy. It is not necessary therefore to use sophisticated equipment to obtain a spectrum. The use of cheap, portable equipment will be adequate to achieve the desired separation. Nor is it always necessary to scan through the full spectral range. Only sufficient scanning to make a positive identification is required; for example, detecting the absorption peak corresponding to the nitrile group in ABS would be sufficient for an identification.

An ideal instrument for use in a commercial environment will be hand held and cheap to manufacture. An operator may have to select a piece of plastics material from a dirty pile, abrade or cut the piece to expose a clean surface, and press the instrument against the surface to obtain an identification. The output from the instrument will be communicated by means of a simple printed identification, a vdu, a recorded or synthesised voice, or an electrical output for control purposes.

When the instrument is to be mounted alongside a plastics sorting line or a disassembly line, it can be set so that items to be identified pass the cell arrangement at a predetermined distance so that they can be identified. Alternatively a part will be held up to a window in the instrument which will display an identification, allowing rapid and easy separation of the different plastics materials.

The workings of the instrument, including pre-programming with standard spectra and means for automatic comparison and identification, may remain hidden from the operator.

Although the invention has been set forth above by reference to, and example of, the separation of plastics materials used in the manufacture of motor vehicles, it will be understood that the invention is not limited to this application.

The invention will also find application in many other areas where it is desired to characterise a material surface quickly. The accuracy and speed of characterisation that is possible is limited only by the capacity of the instrument to store and analyse the spectra of a multiplicity of different chemical types.

The greater the number of spectra that can be stored, the more universal the method is in its applicability.

## Claims

1. An instrument for separating a mixture of pieces of plastics materials into separate categories, the instrument being provided with a mid-infrared radiation source for emitting mid-infrared radiation in the wave range 4000-400 cm⁻¹, means for directing mid-infrared radiation onto a sample surface and for collecting a spectrum of specularly reflected infrared radiation from the sample surface, means for supporting the sample surface at a predetermined position relative to the infrared radiation source and to the means for collecting the reflected spectrum, means for storing reference output spectra and means for comparing the collected spectrum with the stored reference spectra.

2. An instrument as claimed in claim 1, including means for directing each piece of plastics materials into one of a number of different collecting bins.

3. An instrument according to claim 1 or claim 2, wherein the instrument further includes an aperture in its external casing, and wherein the sample support means are adapted to support the sample on the outside of the instrument and overlying the aperture.

4. An instrument according to claim 3 wherein the aperture is provided with means for protecting against dust or other contaminants.

5. An instrument according to claim 4 wherein the protective means comprise a shutter and a shutter actuator, the shutter being adapted to block the aperture when closed and to unblock the aperture when open, and the actuator being actuated to open the shutter while a sample is located over the aperture, and to close the shutter while a sample is not located over the aperture.

6. An instrument according to claim 4 wherein the protective means comprises a housing external to, and substantially surrounding, the instrument casing, the housing being provided with an aperture in registration with the aperture of the instrument casing, and means for supporting the sample surface over the housing aperture.

7. An instrument according to claim 4 wherein the protective means comprise a lens or cover made of a material substantially transparent to infrared radiation in the scanning range.

8. An instrument according to any preceding claim, wherein the instrument is adapted to be held in the hand.

9. An instrument according to any preceding claim, wherein the means for comparing spectra comprises electronic circuitry which compares the spectrum with stored spectra.

10. A method of separating plastics parts made of polypropylene, ABS, polycarbonate, and polyamide, the method comprising the steps of: placing a surface of each part in a predetermined position relative to a surface scanning instrument, scanning the surface of each part with mid-infrared radiation in the wave number range 4000 - 400 cm⁻¹, collecting an output spectrum of specularly reflected radiation from the surface, comparing the collected output spectrum with reference output spectra from polypropylene, ABS, polycarbonate, and polyamide, identifying a correspondence, and placing each part in a bin corresponding to the material category.

## Patentansprüche

1. Instrument zur Trennung eines Gemisches von Kunststoffteilen in separate Gruppen, wobei das Instrument mit einer Infrarotlichtquelle (13) im mittleren Infrarotbereich zur Ausstrahlung einer Infrarotstrahlung (18) im Wellenbereich von 4000 - 400 cm⁻¹ versehen ist, sowie mit Mitteln (2, 4, 6) zur Ausrichtung der Strahlung im mittleren Infrarotbereich auf eine Probenoberfläche (8), und zur Aufzeichnung eines Spektrums der von der Probenoberfläche spiegelartig reflektierten Infrarotstrahlung (20), sowie mit Mitteln (19) zur Aufnahme der Probenoberfläche in einer bestimmten Position in bezug auf die Infrarot-Strahlungsquelle und auf die Mittel zur Aufzeichnung des reflektierten Spektrums, mit Mitteln zur Speicherung von Referenz-Ausgangsspektren und Mitteln zum Vergleichen des aufgezeichneten Spektrums mit den gespeicherten Referenzspektren.

2. Instrument nach Anspruch 1, Mittel aufweisend, welche jedes Kunststoffteil je einem einer Reihe von verschiedenen Sammelbehältern zuführen.

3. Instrument nach Anspruch 1 oder 2, worin das Instrument außerdem eine Öffnung (36) in seinem äußeren Gehäuse (38) aufweist, und worin die Mittel zur Aufnahme der Probe so ausgelegt sind, daß sie die Probe an der Außenseite des Instrumentes, die Öffnung überlagernd halten.

4. Instrument nach Anspruch 3, worin die Öffnung mit Mitteln zum Abschirmen gegen eindringenden Staub oder andere Verunreinigungen versehen ist.

5. Instrument nach Anspruch 4, worin die Abschirmmittel eine Verschlußblende und einen Verschlußauslöser umfassen, wobei der Verschluß so ausgelegt ist, daß er die Öffnung in seiner geschlossenen Stellung blockiert und in seiner geöffneten Stellung freigibt, und wobei der Auslöser zur Öffnung des Verschlusses betätigt wird, wenn sich eine Probe vor der Öffnung befindet, und zum Verschließen des Verschlusses betätigt wird, wenn keine Probe vor der Öffnung liegt.

6. Instrument nach Anspruch 4, worin die Abschirmmittel ein außerhalb des Instrumentengehäuse (18) angeordnetes und dieses im wesentlichen umgebendes Gehäuse (38) aufweisen, wobei dieses Gehäuse mit einer mit der Öffnung (20) im Instrumentengehäuse fluchtenden Öffnung (36) versehen ist, und Mittel, welche die Probenoberfläche vor die Gehäuseöffnung halten.

7. Instrument nach Anspruch 4, worin die Abschirmmittel eine Linse oder Abdeckung umfassen, die aus einem für Infrarotstrahlung im Abtastbereich im wesentlichen transparenten Werkstoff hergestellt ist.

8. Instrument nach einem beliebigen der vorangehenden Ansprüche, worin das Instrument in der Hand tragbar ausgebildet ist.

9. Instrument nach einem beliebigen der vorangehenden Ansprüche, worin die Mittel zum Vergleichen der Spektren eine elektronische Schaltung aufweisen, welche das Spektrum mit gespeicherten Spektren vergleicht.

10. Verfahren zur Trennung von Kunststoffteilen aus Polypropylen, ABS, Polycarbonat und Polyamid, wobei das Verfahren folgende Schritte aufweist:
Anordnen einer Fläche eines jeden Teiles in einer vorbestimmten Lage in bezug auf ein die Oberfläche abtastendes Instrument,
Abtasten der Oberfläche jedes Teiles mittels Infrarotstrahlung im mittleren Bereich, im Wellenzahlbereich von 4000 - 400 cm⁻¹,
Aufzeichnen eines Ausgangsspektrums der spiegelartig von der Oberfläche reflektierten Strahlung,
Vergleichen des aufgezeichneten Ausgangsspektrums mit einem Referenz-Ausgangsspektrum jeweils für Polypropylen, ABS, Polycarbonat und Polyamid,
Ermitteln einer Übereinstimmung, und
Einleiten des jeweiligen Kunststoffteils in einen der Werkstoffgruppe entsprechenden Behälter.

## Revendications

1. Instrument destiné à séparer un mélange de morceaux de matériaux en plastique en catégories séparées, l'instrument étant muni d'une source de rayonnement dans l'infrarouge moyen destinée à émettre un rayonnement dans l'infrarouge moyen dans la plage de nombres d'onde 4 000 à 400 cm⁻¹, un moyen destiné à diriger un rayonnement dans l'infrarouge moyen sur une surface d'échantillon et à recueillir un spectre de rayonnement infrarouge réfléchi de façon spéculaire depuis la surface de l'échantillon, un moyen destiné à supporter la surface de l'échantillon à une position prédéterminée par rapport à la source de rayonnement infrarouge et au moyen destiné à recueillir le spectre réfléchi, un moyen destiné à mémoriser des spectres de sortie de référence et un moyen destiné à comparer le spectre recueilli avec les spectres de référence mémorisés.

2. Instrument selon la revendication 1, comprenant un moyen destiné à diriger chaque morceau de matériau en plastique vers l'un parmi un certain nombre de différents casiers de recueil.

3. Instrument selon la revendication 1 ou la revendication 2, dans lequel l'instrument comprend en outre une ouverture dans son logement externe, et dans lequel le moyen de support d'échantillon est adapté pour supporter l'échantillon sur l'extérieur de l'instrument et en recouvrant l'ouverture.

4. Instrument selon la revendication 3 dans lequel l'ouverture est munie d'un moyen destiné à le protéger contre la poussière ou d'autres contaminants.

5. Instrument selon la revendication 4 dans lequel le moyen protecteur comprend un obturateur et un actionneur d'obturateur, l'obturateur étant adapté pour bloquer l'ouverture lorsqu'il est refermé et pour débloquer l'ouverture lorsqu'il est ouvert, et l'actionneur étant actionné pour ouvrir l'obturateur lorsqu'un échantillon est placé sur l'ouverture, et pour refermer l'obturateur lorsqu'un échantillon n'est pas placé sur l'ouverture.

6. Instrument selon la revendication 4 dans lequel le moyen protecteur comprend un boîtier externe et entourant pratiquement le logement de l'instrument, le boîtier étant muni d'une ouverture alignée avec l'ouverture du logement de l'instrument, et un moyen destiné à supporter la surface de l'échantillon sur l'ouverture du boîtier.

7. Instrument selon la revendication 4, dans lequel le moyen protecteur comprend une lentille ou un couvercle fait d'un matériau pratiquement transparent au rayonnement infrarouge dans la plage du balayage.

8. Instrument selon l'une quelconque des revendications précédentes, dans lequel l'instrument est adapté pour être tenu à la main.

9. Instrument selon l'une quelconque des revendications précédentes, dans lequel le moyen destiné à comparer les spectres comprend des circuits électroniques qui comparent le spectre avec des spectres mémorisés.

10. Procédé de séparation de pièces en plastique faites de polypropylène, d'ABS, de polycarbonate et de polyamide, le procédé comprenant les étapes consistant à : placer une surface de chaque pièce dans une position prédéterminée par rapport à une surface de l'instrument de balayage, balayer la surface de chaque pièce avec un rayonnement dans l'infrarouge moyen dans une plage de nombres d'onde de 4 000 à 400 cm⁻¹, recueillir un spectre en sortie de rayonnement réfléchi de façon spéculaire depuis la surface, comparer le spectre de sortie recueilli avec les spectres de sortie de référence, provenant du polypropylène, de l'ABS, du polycarbonate et du polyamide, identifier une correspondance et plaçer chaque pièce dans un casier correspondant à la catégorie de matériau.
